# FASCICULE DE BREVET EUROPEEN

(11) **EP 4 541 652 B1**
(45) Date de publication et mention de la délivrance du brevet: **27.05.2026**
(21) Numéro de dépôt: 24205628.1
(22) Date de dépôt: 09.10.2024
(51) Int. Cl.: B60N 2/58, B60R 7/00, B60R 7/04

(54) **COIFFE POUR SIÈGE DE VÉHICULE AVEC POCHE AUMÔNIÈRE**
FAHRZEUGSITZBEZUG MIT EINEM VERSTAUBEUTEL
COVER FOR VEHICLE SEAT WITH AN AUXILIARY POCKET

(30) Priorité: 12.10.2023 FR 2310969
(43) Date de publication de la demande: 23.04.2025
(73) Titulaire: Renault s.a.s, 92100 Boulogne Billancourt (FR)
(72) Inventeur: PAPIN, Stéphane, 78280 GUYANCOURT (FR); REMACLE, Henri, 78280 GUYANCOURT (FR)

(56) Documents cités:
- EP-B1- 2 729 327
- DE-A1- 2 149 575
- FR-A1- 3 092 299
- KR-Y1- 0 138 814

## Description

La présente invention se rapporte au domaine des coiffes pour siège de véhicule et plus particulièrement au domaine des coiffes intégrant des rangements tel que des poches aumônières positionnées sur le dossier de sièges de véhicule.

Il est courant d'équiper les véhicules de différents rangements facilement accessibles dans l'habitacle parmi lesquels figurent les poches aumônières. Ces poches aumônières sont plaquées au niveau de la surface arrière des dossiers de certains des sièges du véhicule de sorte que le volume intérieur de la poche est défini par, d'une part, une partie du dossier du siège et, d'autre part, un textile ou un filet rapporté contre le dossier du siège et disposé dans un plan parallèle à ce dossier. L'ouverture pour accéder au volume intérieur de la poche correspond alors au bord supérieur du textile ou du filet.

Les documents DE 21 49 575 A1, FR 3 092 299 A1 et KR 0 138 814 Y1 montrent des coiffes intégrant des poches aumônières sur le dossier de sièges de véhicule. Le document EP 2 729 327 B1 montre un dispositif de fixation d'une coiffe de garnissage de siège automobile sur l'armature du dit siège.

En raison de leurs configurations plaquées contre la surface arrière des dossiers, les poches aumônières sont parfaitement adaptées pour le rangement d'articles de faible épaisseur tels que des cartes routières, des dossiers ou des livres. Toutefois, il peut arriver qu'un article présentant un volume plus encombrant tel qu'une bouteille d'eau soit inséré à l'intérieur de la poche. Lors de l'insertion d'un tel article, la partie de la poche formée par la surface du dossier du siège étant rigide, elle ne supporte aucune déformation. Seule la partie formée par le textile ou le filet rapporté contre le dossier du siège se trouve alors déformée sous l'effet du volume et du poids de l'article. Dans ces conditions, la présence d'un objet encombrant un certain temps dans la poche aumônière, conduit à une sollicitation importante du textile ou du filet de la poche et un relâchement de son bord supérieur qui est alors susceptible de présenter des difficultés à revenir se plaquer contre la surface du dossier du siège. Avec le relâchement de l'ouverture de la poche, la formation d'un écartement entre le bord supérieur de la poche et le dossier du siège est alors susceptible de d'altérer le ressenti quant à la qualité de la finition de l'habitacle du véhicule.

La présente invention a pour but de pallier ces inconvénients en proposant notamment une solution qui permette de limiter le relâchement de l'ouverture de la poche au cours du temps en conservant dans le temps un rendu qualitatif à la finition de l'habitacle du véhicule.

L'invention a ainsi pour objet une coiffe pour siège de véhicule comprenant un dossier configurée pour recouvrir la face postérieure du siège, la coiffe comprenant une poche aumônière sur son dossier, cette poche comprenant une paroi externe de type filet ou textile assemblée le long de ses bords périphériques au dossier de façon à définir un volume de rangement entre la paroi externe et le dossier, le bord supérieur de la paroi externe étant séparé du dossier de façon à former un orifice d'accès au volume de rangement de la poche aumônière, la coiffe comprenant également un mécanisme de renfort de la poche aumônière qui comprend :
- un élément de renfort disposé dans la longueur du bord supérieur de la paroi externe,
- une paire d'éléments de connexion, chacun comprenant, d'une part, une interface de fixation qui coopère avec une extrémité de l'élément de renfort et, d'autre part, une interface de fixation destinée à coopérer avec une portion respective d'un élément de structure du siège destiné à recevoir la coiffe,
la coiffe comprenant également, au niveau de la portion du dossier positionnée en vis-à-vis de la paroi externe, une paire d'orifices traversants l'épaisseur de la coiffe et positionnés à chacune des extrémités du bord supérieur de la paroi externe, chacun de ces orifices étant traversé par l'élément de renfort et/ou l'élément de connexion, caractérisée en ce que la coiffe comprend également - au moins une fermeture éclair, visible ou invisible, dont au moins une portion est positionnée le long d'un bord latéral de la paroi externe.

L'invention a également pour objet un procédé de garnissage d'un siège de véhicule par une coiffe selon l'invention, caractérisé en ce que le procédé comprend :
- une étape d'enveloppement par la coiffe de la structure de siège recouverte d'une matelassure,
- une étape de montage de chaque interface de fixation du mécanisme de renfort sur un élément de structure du siège,
- une étape de fermeture de la coiffe par déplacement du curseur de la fermeture éclair.

L'invention sera mieux comprise, grâce à la description ci-après, qui se rapporte à des modes de réalisation préférés, donnés à titre d'exemple non limitatif, et expliqués avec référence aux dessins schématiques annexés, dans lesquels :

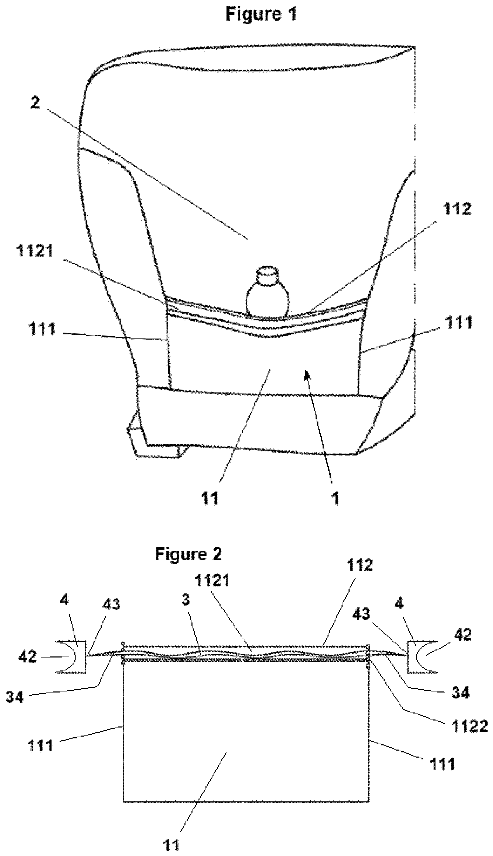

[Fig. 1] représente une illustration schématique depuis l'arrière d'un siège d'un exemple de coiffe selon l'invention habillée sur un siège, la coiffe intégrant une poche aumônière avec un mécanisme de renfort en présence d'un objet.
[Fig. 2] représente une illustration schématique de différents éléments d'un exemple de poche aumônière d'une coiffe selon l'invention.

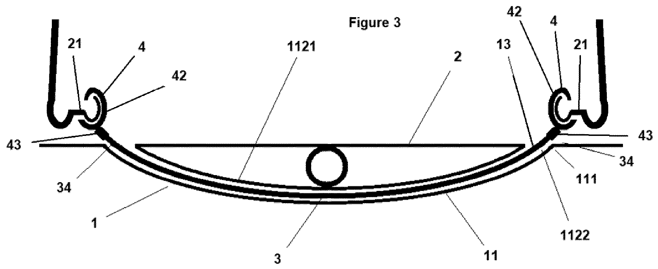

[Fig. 3] représente une illustration schématique du dessus du dossier d'une coiffe selon l'invention intégrant une poche aumônière en présence d'un objet.
La présente invention se rapporte à une coiffe pour siège de véhicule comprenant un dossier 2 configurée pour recouvrir la face postérieure du siège,
la coiffe comprenant une poche aumônière 1 sur son dossier 2, cette poche 1 comprenant une paroi externe 11 de type filet ou textile assemblée le long de ses bords périphériques 111 au dossier 2 de façon à définir un volume de rangement entre la paroi externe 11 et le dossier 2, le bord supérieur 112 de la paroi externe 11 étant séparé du dossier 2 de façon à former un orifice d'accès au volume de rangement de la poche aumônière, la coiffe comprenant également un mécanisme de renfort de la poche aumônière 1 qui comprend :
   - un élément de renfort 3 disposé dans la longueur du bord supérieur 112 de la paroi externe 11,
   - une paire d'éléments de connexion 4, chacun comprenant, d'une part, une interface de jonction 43 qui coopère avec une extrémité 34 de l'élément de renfort 3 et, d'autre part, une interface de fixation 42 destinée à coopérer avec une portion respective d'un élément de structure 21 du siège destiné à recevoir la coiffe, la coiffe comprenant également, au niveau de la portion du dossier 2 positionnée en vis-à-vis de la paroi externe 11, une paire d'orifices 13 traversants l'épaisseur de la coiffe et positionnés à chacune des extrémités du bord supérieur 112 de la paroi externe 11, chacun de ces orifices 13 étant traversé par l'élément de renfort 3 et/ou l'élément de connexion 4.

Selon un exemple se rapportant à une variante de construction du mécanisme de renfort de la coiffe, au moins un des éléments de renfort 3 et/ou de connexion 4 présente des propriétés élastiques selon l'axe du bord supérieur 112 de la paroi externe 11.

Le mécanisme de renfort de la coiffe selon l'invention est ainsi construit pour être positionné au niveau de l'orifice d'accès au volume de rangement de façon, d'une part, à permettre une ouverture facilitée de cet orifice par traction sur le bord supérieur 112 de la paroi externe 11 pour l'écarter du dossier 2 et, d'autre part, à permettre la fermeture de cet orifice par plaquage du bord supérieur 112 de la paroi externe 11 contre le dossier 2 grâce aux propriétés élastiques des éléments de renfort 3 et/ou de connexion 4 et à leur coopération, directe ou indirecte, avec l'élément de structure 21 du siège. L'élément de structure 21 du siège est susceptible de correspondre à au moins une partie de l'armature. En effet, une telle coopération directe avec l'élément de structure 21 du siège permet la réalisation d'un mécanisme de renfort ancré sur une structure rigide et non pas simplement avec une structure plus souple comme peut l'être un revêtement qui forme la surface du siège. La coopération des propriétés élastiques des éléments de renfort 3 et/ou de connexion 4 avec un ancrage à l'élément de structure 21 du siège optimise ainsi le plaquage et la retenue dans le temps du bord supérieur 112 de la paroi externe 11 contre la surface du dossier 2.

Selon différents exemples de construction, les propriétés élastiques du mécanisme de renfort de la coiffe sont distribuées entre les différents éléments 3, 4 que réalise l'ensemble réunissant les éléments de renfort 3 et de connexion 4. A titre d'exemple, la présence de matériaux élastiques au niveau des seuls éléments de connexion 4 permet la réalisation d'un mécanisme avec un élément de renfort 3 rigide de sorte que le bord supérieur 112 de la paroi externe 11 puisse être écarté du dossier 2 sur l'ensemble de sa longueur avec une déformation restreinte, par exemple en flexion, voire même sans déformation. A titre d'exemple alternatif, la réalisation d'un mécanisme avec un élément de renfort 3 souple déformable mais non élastique permet d'obtenir un bord supérieur 112 de la paroi externe 11 qui soit en mesure de s'adapter à la surface d'un objet éventuel positionné au travers de l'orifice d'accès au volume de rangement en épousant au moins une partie de sa surface. A titre d'exemple alternatif également, la présence de matériaux élastiques au niveau des seuls éléments de renfort 3, voire préférentiellement au niveau de l'ensemble des éléments de renfort 3 et de connexion 4, permet la réalisation d'un mécanisme dans lequel des moyens élastiques sont distribués et répartis le long d'une longueur plus importante de façon à optimiser la capacité du bord supérieur 112 de la paroi externe 11, d'une part, de supporter une déformation lors de l'insertion d'un objet au travers de l'orifice d'accès au volume de rangement et, d'autre part, de retourner en position plaquer en appui contre la surface du dossier 2.

Selon un exemple se rapportant à une autre variante de construction du mécanisme de renfort de la coiffe, le bord supérieur 112 de la paroi externe 11 étant réalisé par un ourlet 1121 du matériau de la paroi externe 11, l'essentiel de la longueur de l'élément de renfort 3 est disposé dans l'épaisseur de l'ourlet 1121. L'intégration de l'élément de renfort 3 à l'intérieur d'un ourlet 1121 permet le positionnement de cet élément de renfort 3 à l'intérieur de la paroi externe 11 de sorte que, d'une part, l'élément de renfort 3 se trouve masqué et soit invisible depuis l'habitacle du véhicule et, d'autre part, la surface intérieure de l'ourlet 1121 réalise une surface de contact avec l'élément de renfort 3 pour permettre la retenue du bord supérieur 112 de la paroi externe 11 et son plaquage contre le dossier 2. L'ourlet 1121 de la paroi externe 11 est ainsi utilisé comme gaine à l'intérieure de laquelle l'élément de renfort 3 est apte à opérer un déplacement, en coulissement ou en étirement par rapport à la paroi externe 11.

Selon un exemple se rapportant à une variante spécifique de la variante de construction précédemment détaillée, l'ourlet 1121 du matériau de la paroi externe 11 comprend au moins un orifice 1122 de passage de l'élément de renfort 3 orienté vers l'intérieur du dossier 2. L'orientation particulière de l'orifice 1122 de l'ourlet 1121 de sorte qu'il fait face au dossier 2, permet, au niveau des extrémités du bord supérieur 112 de la paroi externe 11, c'est-à-dire aux extrémités de l'orifice d'accès au volume de rangement, de masquer la présence d'un élément de renfort 3 à l'intérieur de l'ourlet 1121. En étant orienté vers le dossier 2, l'orifice 1122 de l'ourlet 1121 est arrangé pour être préférentiellement positionné en vis-à-vis d'orifice 13 traversants l'épaisseur de la coiffe de sorte que l'élément de renfort 3 de traverse la surface du dossier 2 de la coiffe pour accéder à l'élément de structure 21 située en profondeur sous la matelassure du siège.

Selon un exemple se rapportant à une autre variante spécifique de la variante de construction précédemment détaillée, l'ourlet 1121 est susceptible d'adopter la forme de plusieurs passants disposés notamment face au dossier 2 et espacés entre eux. Ces passants étant positionnés face au dossier 2, ils demeurent masqués par la surface de l'ourlet 1121 et invisibles depuis l'habitacle du véhicule.

Selon un autre exemple se rapportant à une variante de construction du mécanisme de renfort de la coiffe, l'élément de renfort 3 est réalisé sous la forme d'une bande. A titre d'exemple, cette bande est susceptible d'être réalisée par une sangle souple ou par une lame sensiblement rigide. Un tel arrangement permet d'opérer un plaquage du bord supérieur 112 de la paroi externe 11 sur une hauteur de ce bord élargit à la largeur de la bande de l'élément de renfort 3. En exerçant une tension sur une largeur plus importante, le plaquage du bord supérieur 112 de la paroi externe 11 contre le dossier 2 de l'assise s'en trouve alors amélioré. De même, lorsque des moyens élastiques se trouvent distribués sur l'ensemble de la largeur de la bande de l'élément de renfort 3, l'élément de renfort 3 présente une résistance plus importante au cours du temps.

Selon un exemple se rapportant à une autre variante de construction du mécanisme de renfort de la coiffe, chaque interface de fixation 42 à l'élément de structure 21 présente un arrangement clipsable de forme concave complémentaire en section avec une portion verticale de l'élément de structure 21 du siège. Une portion verticale de l'élément de structure 21 réalise un point d'ancrage particulièrement pertinent pour bloquer en translation horizontale le déplacement de l'élément de connexion 4. La coopération de l'élément de connexion 4 avec l'élément de structure 21 du siège permet notamment un ancrage de l'élément de connexion 4 au siège. Selon une variante spécifique de construction de l'élément de structure 21 du siège, celui-ci présente, dans un plan horizontal, au moins une portion disposée selon un axe sensiblement orientée, voire alignée, avec l'axe de tension de l'élément de renfort 3 du mécanisme de renfort de la coiffe. Cette portion de l'élément de structure 21 du siège est ainsi orientée de façon transversale par rapport à l'axe principal du véhicule destiné à recevoir le siège.

Selon un exemple se rapportant à une autre variante de construction du mécanisme de renfort de la coiffe, l'interface de fixation 42 d'un élément de connexion 4 à l'élément de structure 21 positionné à une première extrémité 34 de l'élément de renfort 3 comprend au moins un crochet présentant une concavité orientée vers l'élément de connexion 4 homologue positionné à la seconde extrémité 34 de l'élément de renfort 3. Ce crochet est également susceptible de correspondre à une interface de pincement d'une portion de l'élément de structure 21 du dossier. De façon similaire, le crochet de l'interface de fixation 42 est également susceptible de correspondre à une portion d'anneau. Ce crochet de l'interface de fixation 42 présente une ouverture et un arrangement de forme sensiblement complémentaire à l'élément de structure 21 du siège ou à une portion spécifiquement dédiée de l'élément de structure 21 du siège. Cette portion spécifiquement dédiée de l'élément de structure 21 est susceptible de prendre la forme d'un crochet, d'un anneau ou encore d'une portion d'anneau de forme complémentaire et adaptée au crochet porté par l'interface de fixation 42 de l'élément de connexion 4.

Selon un exemple se rapportant à une autre variante de construction du mécanisme de renfort de la coiffe, l'interface de fixation 42 à l'élément de structure 21 d'au moins un élément de connexion 4 comprend un moyen de clipsage de l'élément de connexion 4. A titre d'exemple, ce clipsage faisant intervenir l'élément de connexion 4 est susceptible de correspondre à un mécanisme de type mousqueton ou encore, alternativement, à un mécanisme qui présente une coopération de forme de type mâle-femelle entre deux pièces intégrant des éléments ressorts pour un verrouillage de ces deux pièces entre elles, par exemple en faisant opérer un pincement d'une première des deux pièces avec la seconde des deux pièces.

Selon un exemple se rapportant à une variante de construction, la coopération de l'interface de fixation 42 avec l'élément de structure 21 d'un siège fait intervenir une portion de fixation de l'armature dont la section n'est pas ronde. Cet arrangement de la portion de l'élément de structure 21 correspond par exemple à une section de forme ovale ou ovoïde ou encore effilée comme une goutte ou une aile d'avion, voire également à une section comprenant un bord angulaire. L'interface de fixation 42 coopère avec la portion de l'élément de structure 21 en entourant au moins partiellement, voire en pinçant, la portion de l'élément de structure 21 correspondante. Cette coopération de l'interface de fixation 42 avec l'élément de structure 21 est ainsi réalisée de sorte que l'élément de connexion 4 n'est pas en mesure de pivoter autour de l'axe de la portion de l'élément de structure 21.

Selon un exemple se rapportant à une autre variante de construction du mécanisme de renfort de la coiffe, l'interface de jonction 43 entre l'élément de connexion 4, chacun comprenant, d'une part, une interface de jonction 43 qui coopère avec une extrémité 34 de l'élément de renfort 3 fait intervenir une jonction obtenue par extrusion de l'élément de connexion 4 avec l'élément de renfort 3. Selon des alternatives de réalisation, cette interface de jonction 43 fait intervenir une couture et/ou un collage.

Selon un exemple se rapportant à une autre variante de construction du mécanisme de renfort de la coiffe, l'ensemble combinant l'élément de renfort 3 avec la paire d'éléments de connexion 4 comprend un moyen de réglage de la longueur de l'ensemble entre les deux points de fixation respectifs des éléments de connexion 4 sur l'élément de structure 21 du siège. Ce moyen de réglage est réalisé sous la forme d'un mécanisme d'ajustement de la longueur de l'élément de renfort 3 permettant notamment de raccourcir la longueur de l'élément de renfort 3 pour effectuer un contrôle de la tension élastique du mécanisme de l'invention. Aussi, en cas de relâchement de la tension élastique du mécanisme de l'invention dans le temps, le moyen de réglage permet de réduire la longueur de l'élément de renfort 3 de sorte que la tension se trouve adaptée. A titre d'exemple de mise en œuvre, ce moyen de réglage est positionné au niveau de l'interface de jonction 43 d'un élément de connexion 4 qui interagit avec l'élément de renfort 3. Ce moyen de réglage est également susceptible d'être porté par l'interface de jonction 43 de l'élément de connexion 4 en prenant, par exemple, la forme d'un mécanisme de réglage à boucle de sangles.

Selon l'invention, la coiffe comprend également au moins une fermeture éclair, visible ou invisible, dont au moins une portion est positionnée le long d'un bord latéral 111 de la paroi externe 11. Selon cet exemple de construction, une des bandes de la fermeture éclair longe le bord latéral de la paroi externe 11 de la poche aumônière 1. Cette fermeture éclair est disposée au niveau d'une portion de la coiffe de façon à permettre de séparer au moins deux pans de la coiffe pour faciliter son installation et son habillage sur la structure du siège recouverte d'une matelassure. Lorsque la coiffe est positionnée sur le siège, voire même lorsque l'interface de fixation 42 du mécanisme de renfort de la poche aumônière 1 sont attaché sur un élément de structure 21 du siège, les pans de la coiffe sont en mesure d'être rapproché et la coiffe refermée pour envelopper le siège. Le positionnement d'une fermeture éclair le long d'un bord latéral de la paroi externe 11 de la poche aumônière 1, outre d'avoir un éventuel intérêt esthétique, permet de positionner la séparation entre deux pans de la coiffe au niveau ou à proximité de la zone d'accroche de l'interface de fixation 42 à l'élément de structure 21 du siège. Aussi, la coiffe est en mesure d'être essentiellement positionnée sur la matelassure du siège selon un arrangement final pour permettre le montage de l'interface de fixation 42 à l'élément de structure 21 du siège, avant de fermer complètement la coiffe sur le siège par déplacement du curseur de la fermeture éclair qui en réunit les deux pans. Selon un exemple se rapportant à une variante spécifique de la variante de construction précédemment détaillée, la coiffe comprend deux fermetures éclair, visibles ou invisibles, comprenant respectivement au moins une portion positionnée le long de chacun des bords latéraux de la paroi externe 11. Selon cette variante spécifique de construction, les fermetures éclair comprennent une bande de la fermeture éclair respective qui longe le bord latéral de la paroi externe 11 de la poche aumônière 1. Selon un arrangement préféré, les fermetures éclair sont orientées parallèlement entre elles de part et d'autre des bords latéraux de la paroi externe 11 de la poche aumônière 1.

L'invention porte également sur un procédé de garnissage d'un siège de véhicule par une coiffe selon l'invention, caractérisé en ce que le procédé comprend :
- une étape d'enveloppement par la coiffe de la structure de siège recouverte d'une matelassure,
- une étape de montage de chaque interface de fixation 42 du mécanisme de renfort sur un élément de structure 21 du siège,
- une étape de fermeture de la coiffe par déplacement du curseur de la fermeture éclair.

Bien entendu, l'invention n'est pas limitée aux modes de réalisation décrits et représentés aux dessins annexés. Des modifications restent possibles, notamment du point de vue de la constitution des divers éléments, tant que ces modifications restent dans le cadre des revendications annexées.

## Revendications

1. Coiffe pour siège de véhicule comprenant un dossier (2) configurée pour recouvrir la face postérieure du siège, la coiffe comprenant une poche aumônière (1) sur son dossier (2), cette poche (1) comprenant une paroi externe (11) de type filet ou textile assemblée le long de ses bords périphériques (111) au dossier (2) de façon à définir un volume de rangement entre la paroi externe (11) et le dossier (2), le bord supérieur (112) de la paroi externe (11) étant séparé du dossier (2) de façon à former un orifice d'accès au volume de rangement de la poche aumônière, la coiffe comprenant également :
- un mécanisme de renfort de la poche aumônière (1) qui comprend :
- un élément de renfort (3) disposé dans la longueur du bord supérieur (112) de la paroi externe (11),
- une paire d'éléments de connexion (4), chacun comprenant, d'une part, une interface de jonction (43) qui coopère avec une extrémité (34) de l'élément de renfort (3) et, d'autre part, une interface de fixation (42) destinée à coopérer avec une portion respective d'un élément de structure (21) du siège destiné à recevoir la coiffe,
- une paire d'orifices (13) positionnée sur la portion du dossier (2) en vis-à-vis de la paroi externe (11), ces orifices (13) traversants l'épaisseur de la coiffe étant positionnés à chacune des extrémités du bord supérieur (112) de la paroi externe (11), chacun de ces orifices (13) étant traversé par l'élément de renfort (3) et/ou l'élément de connexion (4), **caractérisée en ce que** la coiffe comprend également:
- au moins une « Fermeture éclair »^{®}, visible ou invisible, dont au moins une portion est positionnée le long d'un bord latéral (111) de la paroi externe
(11).

2. Coiffe pour siège de véhicule selon la revendication 1, **caractérisée en ce que**, le bord supérieur (112) de la paroi externe (11) étant réalisé par un ourlet (1121) du matériau de la paroi externe (11), l'essentiel de la longueur de l'élément de renfort (3) est disposé dans l'épaisseur de l'ourlet (1121).

3. Coiffe pour siège de véhicule selon une des revendications précédentes, **caractérisée en ce que** au moins un des éléments de renfort (3) et/ou de connexion (4) présente des propriétés élastiques selon l'axe du bord supérieur (112) de la paroi externe (11).

4. Coiffe pour siège de véhicule selon une des revendications précédentes, **caractérisée en ce que** chaque interface de fixation (42) à l'élément de structure (21) présente un arrangement clipsable de forme concave complémentaire en section avec une portion verticale de l'élément de structure (21) du dossier (2).

5. Coiffe pour siège de véhicule selon une des revendications précédentes, **caractérisée en ce que** l'interface de fixation (42) d'un élément de connexion (4) à l'élément de structure (21) positionné à une première extrémité (34) de l'élément de renfort (3) comprend au moins un crochet présentant une concavité orientée vers l'élément de connexion (4) homologue positionné à la seconde extrémité (34) de l'élément de renfort (3).

6. Coiffe pour siège de véhicule selon une des revendications précédentes, **caractérisée en ce que** l'interface de fixation (42) à l'élément de structure (21) d'au moins un élément de connexion (4) comprend un moyen de clipsage de l'élément de connexion (4).

7. Coiffe pour siège de véhicule selon une des revendications précédentes, **caractérisée en ce que** l'ensemble combinant l'élément de renfort (3) avec la paire d'éléments de connexion (4) comprend un moyen de réglage de la longueur de l'ensemble entre les deux points de fixation respectifs des éléments de connexion (4) sur l'élément de structure (21) du dossier (2).

8. Coiffe pour siège de véhicule selon une des revendications précédentes, **caractérisée en ce que** la coiffe comprend deux « Fermeture éclair » ^{®}, visibles ou invisibles, comprenant respectivement au moins une portion positionnée le long de chacun des bords latéraux de la paroi externe (11).

9. Procédé de garnissage d'un siège de véhicule par une coiffe selon une des revendications 1 à 8, **caractérisé en ce que** le procédé comprend :
- une étape d'enveloppement par la coiffe de la structure de siège recouverte d'une matelassure,
- une étape de montage de chaque interface de fixation (42) du mécanisme de renfort sur un élément de structure (21) du siège,
- une étape de fermeture de la coiffe par déplacement du curseur de la « Fermeture éclair » ^{®}.

## Patentansprüche

1. Sitzbezug für einen Fahrzeugsitz mit einer Rückenlehne (2), der dazu ausgelegt ist, die Rückseite des Sitzes zu bedecken, wobei der Sitzbezug an seiner Rückenlehne (2) eine Stautasche (1) aufweist, wobei diese Tasche (1) eine äußere Wand (11) aus Netz- oder Textilmaterial umfasst, die entlang ihrer Umfangsränder (111) mit der Rückenlehne (2) verbunden ist, sodass zwischen der äußeren Wand (11) und der Rückenlehne (2) ein Stauraum gebildet wird, wobei der obere Rand (112) der äußeren Wand (11) von der Rückenlehne (2) beabstandet ist, um eine Zugangsöffnung zu dem Stauraum der Stautasche zu bilden,
**dadurch gekennzeichnet, dass** der Sitzbezug ferner umfasst:
• einen Verstärkungsmechanismus für die Stautasche (1), der umfasst:
∘ ein Verstärkungselement (3), das entlang der Länge des oberen Randes (112) der äußeren Wand (11) angeordnet ist,
∘ein Paar Verbindungselemente (4), wobei jedes einerseits eine Verbindungs-schnittstelle (43) aufweist, die mit einem Ende (34) des Verstärkungselements (3) zusammenwirkt, und andererseits eine Befestigungs-schnittstelle (42), die dazu bestimmt ist, mit einem jeweiligen Abschnitt eines Strukturelements (21) des Sitzes zusammenzuwirken, das zur Aufnahme des Sitzbezugs vorgesehen ist,
• ein Paar Öffnungen (13), das auf dem Abschnitt der Rückenlehne (2) gegenüber der äußeren Wand (11) angeordnet ist, wobei diese Öffnungen (13) die Dicke des Sitzbezugs durchdringen und jeweils an den beiden Enden des oberen Randes (112) der äußeren Wand (11) angeordnet sind, wobei jede dieser Öffnungen (13) von dem Verstärkungselement (3) und/oder dem Verbindungselement (4) durchgriffen wird,
• mindestens einen Reißverschluss, sichtbar oder unsichtbar, von dem mindestens ein Abschnitt entlang eines Seitenrandes (111) der äußeren Wand (11) angeordnet ist.

2. Sitzbezug nach Anspruch 1, **dadurch gekennzeichnet, dass** der obere Rand (112) der äußeren Wand (11) durch einen Saum (1121) des Materials der äußeren Wand (11) gebildet ist, wobei der überwiegende Teil der Länge des Verstärkungselements (3) innerhalb der Dicke des Saums (1121) angeordnet ist.

3. Sitzbezug nach einem der vorhergehenden Ansprüche, **dadurch gekennzeichnet, dass** mindestens eines der Verstärkungselemente (3) und/oder der Verbindungselemente (4) elastische Eigenschaften entlang der Achse des oberen Randes (112) der äußeren Wand (11) aufweist.

4. Sitzbezug nach einem der vorhergehenden Ansprüche, **dadurch gekennzeichnet, dass** jede Befestigungs-schnittstelle (42) zu dem Strukturelement (21) eine einclipsbare Anordnung mit einer konkaven Form im Querschnitt aufweist, die zu einem vertikalen Abschnitt des Strukturelements (21) der Rückenlehne (2) komplementär ist.

5. Sitzbezug nach einem der vorhergehenden Ansprüche, **dadurch gekennzeichnet, dass** die Befestigungs-schnittstelle (42) eines Verbindungselements (4) an dem Strukturelement (21), das an einem ersten Ende (34) des Verstärkungselements (3) angeordnet ist, mindestens einen Haken umfasst, der eine Konkavität aufweist, die zu dem homologen Verbindungselement (4) hin orientiert ist, das am zweiten Ende (34) des Verstärkungselements (3) angeordnet ist.

6. Sitzbezug nach einem der vorhergehenden Ansprüche, **dadurch gekennzeichnet, dass** die Befestigungs-schnittstelle (42) zu dem Strukturelement (21) von mindestens einem Verbindungselement (4) Mittel zum Einclipsen des Verbindungselements (4) umfasst.

7. Sitzbezug nach einem der vorhergehenden Ansprüche, **dadurch gekennzeichnet, dass** die Baugruppe, die das Verstärkungselement (3) mit dem Paar von Verbindungselementen (4) kombiniert, Mittel zur Einstellung der Länge der Baugruppe zwischen den beiden jeweiligen Befestigungspunkten der Verbindungselemente (4) an dem Strukturelement (21) der Rückenlehne (2) umfasst.

8. Sitzbezug nach einem der vorhergehenden Ansprüche, **dadurch gekennzeichnet, dass** der Sitzbezug zwei Reißverschlüsse^{®} umfasst, sichtbar oder unsichtbar, die jeweils mindestens einen Abschnitt entlang jedes der Seitenränder der äußeren Wand (11) aufweisen.

9. Verfahren zum Beziehen eines Fahrzeugsitzes mit einem Sitzbezug nach einem der Ansprüche 1 bis 8, **dadurch gekennzeichnet, dass** das Verfahren umfasst:
• einen Schritt des Umhüllens der mit einer Polsterung versehenen Sitzstruktur mit dem Sitzbezug,
• einen Schritt des Montierens jeder Befestigungs-schnittstelle (42) des Verstärkungsmechanismus an einem Strukturelement (21) des Sitzes,
• einen Schritt des Schließens des Sitzbezugs durch Verstellen des Schlittens des Reißverschlusses^{®}.

## Claims

1. A seat cover for a vehicle seat including a backrest (2), configured to cover the rear face of the seat, the cover comprising an organizer pocket (1) on its backrest (2), said pocket (1) comprising an outer wall (11) of mesh or textile type assembled along its peripheral edges (111) to the backrest (2) so as to define a storage volume between the outer wall (11) and the backrest (2), the upper edge (112) of the outer wall (11) being spaced from the backrest (2) so as to form an access opening to the storage volume of the organizer pocket, **characterized in that** the cover further comprises:
• a reinforcement mechanism for the organizer pocket (1) comprising:
∘ a reinforcement element (3) arranged along the length of the upper edge (112) of the outer wall (11),
∘ a pair of connection elements (4), each comprising, on the one hand, a joining interface (43) cooperating with an end (34) of the reinforcement element (3), and, on the other hand, a fixing interface (42) intended to cooperate with a respective portion of a structural element (21) of the seat intended to receive the cover,
• a pair of openings (13) positioned on the portion of the backrest (2) facing the outer wall (11), said openings (13) extending through the thickness of the cover and being positioned at each end of the upper edge (112) of the outer wall (11), each of said openings (13) being traversed by the reinforcement element (3) and/or the connection element (4),
• at least one zipper, visible or invisible, at least a portion of which is positioned along a lateral edge (111) of the outer wall (11).

2. The seat cover according to claim 1, **characterized in that** the upper edge (112) of the outer wall (11) is formed by a hem (1121) of the material of the outer wall (11), the major part of the length of the reinforcement element (3) being arranged within the thickness of the hem (1121).

3. The seat cover according to one of the preceding claims, **characterized in that** at least one of the reinforcement element(s) (3) and/or the connection element(s) (4) has elastic properties along the axis of the upper edge (112) of the outer wall (11).

4. The seat cover according to one of the preceding claims, **characterized in that** each fixing interface (42) to the structural element (21) comprises a clip-fastening arrangement having a concave shape in cross-section complementary to a vertical portion of the structural element (21) of the backrest (2).

5. The seat cover according to one of the preceding claims, **characterized in that** the fixing interface (42) of a connection element (4) to the structural element (21) positioned at a first end (34) of the reinforcement element (3) comprises at least one hook having a concavity oriented toward the homologous connection element (4) positioned at the second end (34) of the reinforcement element (3).

6. The seat cover according to one of the preceding claims, **characterized in that** the fixing interface (42) to the structural element (21) of at least one connection element (4) comprises means for clipping the connection element (4).

7. The seat cover according to one of the preceding claims, **characterized in that** the assembly combining the reinforcement element (3) with the pair of connection elements (4) comprises means for adjusting the length of the assembly between the two respective fixing points of the connection elements (4) on the structural element (21) of the backrest (2).

8. The seat cover according to one of the preceding claims, **characterized in that** the cover comprises two zippers^{®}, visible or invisible, each comprising at least one portion positioned along each of the lateral edges of the outer wall (11).

9. A method for upholstering a vehicle seat with a cover according to one of claims 1 to 8, **characterized in that** the method comprises:
• a step of wrapping the seat structure covered with padding with the cover,
• a step of mounting each fixing interface (42) of the reinforcement mechanism onto a structural element (21) of the seat,
• a step of closing the cover by moving the slider of the zipper^{®}.
